# EUROPEAN PATENT SPECIFICATION

(11) **EP 4 234 985 B1**
(45) Date of publication and mention of the grant of the patent: **04.12.2024**
(21) Application number: 23155796.8
(22) Date of filing: 09.02.2023
(51) Int. Cl.: F16H 63/50, F16H 61/04, F16H 59/44

(54) **SYSTEM AND METHOD FOR SHIFTING GEARS IN A GEARBOX OF A DRIVETRAIN IN A VEHICLE**
SYSTEM UND VERFAHREN ZUM SCHALTEN VON GÄNGEN IN EINEM GETRIEBE EINES ANTRIEBSSTRANGS IN EINEM FAHRZEUG
SYSTÈME ET PROCÉDÉ DE CHANGEMENT DE VITESSE DANS UNE BOÎTE DE VITESSES D'UNE CHAÎNE CINÉMATIQUE DANS UN VÉHICULE

(30) Priority: 24.02.2022 JP 2022026979
(43) Date of publication of application: 30.08.2023
(73) Proprietor: Suzuki Motor Corporation, Hamamatsu-shi, Shizuoka 432-8611 (JP)
(72) Inventor: Shunsuke, GOTO, SHIZUOKA (JP); Shinya, AKAGAWA, SHIZUOKA (JP)
(74) Representative: Plasseraud IP

(56) References cited:
- WO-A1-01/92048
- DE-A1- 19 931 770
- US-A1- 2021 129 846

## Description

### BACKGROUND OF THE INVENTION

The present invention relates to a system and method for shifting between gears in a gearbox of a drivetrain in a vehicle.

JP2004-52925A (Patent Literature 1) discloses a known system for shifting between gears in a multi-step synchronized gearbox of a vehicle drivetrain. In this known system, a controller sets a real value of the shift-select completion position for each gear as a learning value, and resets the preceding learning value in consideration of a deviation of a newly set learning value from the preceding learning value.

Further examples of systems for shifting between gears in a gearbox of a drivetrain in a vehicle can be found for instance in WO 01/92048 A1, on which the two-part form is based, or DE 199 31 770 A1.

In automatic multi-step synchronized gearboxes, there is a possibility that a so-called "gear shifting block," which hinders the progress of a gear shifting, may occur when a part that moves during a gear shifting contacts the end face of other gear wheel or a dog. Occurrence of a gear shifting block indicates the situation that the part that moves during a gear shifting cannot continue its movement, and so gear wheels to be meshed to achieve a target gear are not fully meshed. In manual multi-step synchronized gearboxes, perceiving a gear shifting block during a gear shifting, the driver empirically shifts to other gear and reengage a disconnect clutch to alter the phase between gear wheels of the pair to be meshed to achieve the target gear.

[Patent Literature 1] JP 2004-52925 A

However, JP 2004-52925 A does not contain any description about a gear shifting block, let alone an action taken to counteract the gear shifting block.

Accordingly, a need exists for a system and method for automatically eliminate a gear shifting block during shifting gears in a gearbox while an engine is being stopped.

### SUMMARY OF THE INVENTION

In one aspect of the present invention, there is provided a system for shifting between gears in a gearbox of a drivetrain in a vehicle, including: an engine having a crankshaft; an electric machine configured to provide a motor motion to the crankshaft; a gearbox having an input shaft; a clutch between the crankshaft and the input shaft, and a controller configured to engage the clutch and start the electric machine to provide a motor motion to the crankshaft following determination that a gear shifting block occurs during shifting between gears in the gearbox while the engine is being stopped.

In a further aspect of the present invention, there is provided a method according to claim 6. Preferred embodiments of the present invention are laid down in the dependent claims.

As described, a gear shifting block is automatically eliminated in a brief time, and the gear shifting is completed in a brief time.

### BRIEF DESCRIPTION OF THE DRAWINGS

FIG. 1 is a diagram of a drivetrain for a hybrid electric vehicle.
FIG. 2A through FIG. 2H are plots of gear selector position, target/actual gear, gear shifting stroke, clutch stroke, availability of retry inhibit condition, retry request status, ISG control status, and input rotational speed, respectively.

### DETAILED DESCRIPTION

Disclosed is a system for shifting between gears in a gearbox of a drivetrain in a vehicle, including: an engine having a crankshaft; an electric machine configured to provide a motor motion to the crankshaft; a gearbox having an input shaft; a clutch between the crankshaft and the input shaft, and a controller configured to engage the clutch and start the electric machine to provide a motor motion to the crankshaft following determination that a gear shifting block occurs during shifting between gears in the gearbox while the engine is being stopped. This automatically eliminates a gear shifting block in a brief time, and completes the gear shifting in a brief time.

Referring to the accompanying drawings, the following is description of a system and method to control a drivetrain such that the drivetrain will automatically eliminate a gear shifting block.

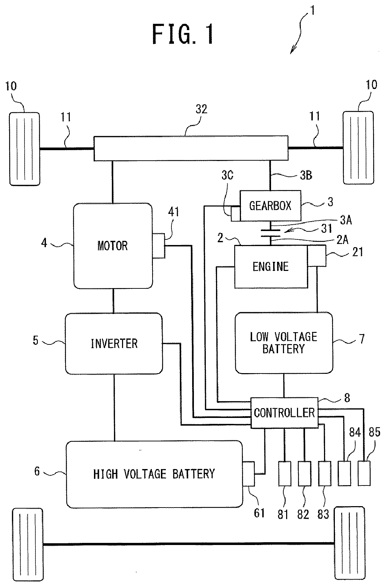

FIG. 1 is a diagram of a drivetrain for, but not limited to, a hybrid electric vehicle 1. The drivetrain includes an engine 2 in the form of an internal combustion engine, a gearbox 3, a motor 4, an inverter 5, a high voltage battery 6, a low voltage battery 7, and a controller 8.

The engine 2 has two or more cylinders. In this example, the engine 2 is a four-stroke internal combustion engine in which the piston in each cylinder completes four separate strokes (i.e., intake, compression, combustion, and exhaust) while turning the crankshaft.

The engine 2 is provided with an electric machine in the form of but not limited to an integrated starter generator (ISG) 21. The ISG 21 is connected to the crankshaft 2A of the engine 2 via a belt (not shown). The ISG 21 converts electricity from the low voltage battery 7 into movement to start the engine 2, and then, once it is running, it starts turning the engine's movement into power, thereby transferring its motor torque, as a traction torque, to the engine 2. If the crankshaft 2A instead spins the ISG 21, the ISG works the other way around and creates electricity. As such, the ISG 21 is an electric machine integrating a starter and a generator. In addition to the ISG 21, the engine 2 may be provided with a starter that only starts the engine 2.

A dry single plate clutch 31 is installed between the crankshaft 2A of the engine 2 and an input shaft 3A of the gearbox 3 and it becomes engaged to transfer power from the crankshaft 2A to the gearbox 3 or disengaged to interrupt the power transfer.

The gearbox 3 can change the speed ratio of the speed of an output shaft 3B to the speed of the input shaft 3A. The rotation of the output shaft 3B is transmitted to the vehicle wheels 10 via a differential 32 and drive axles 11.

The gearbox 3 includes a gear train (not shown) including gear pairs with parallel axes. The gearbox 3 has multiple gears, each being achieved by putting the corresponding one of gear pairs in a power flow path between the input and output shafts 3A and 3B. For shifting to a target gear, that one gear wheel of the corresponding one of constant mesh gear pairs for forward gears which rotates freely on a shaft is engaged by an axially displaceable sleeve of a synchronizer coupled to the shaft, and one gear wheel of a gear pair for reverse is axially moved along a shaft into engagement with the mating gear wheel.

Moreover, for shifting to one of forward gears, that one gear wheel of the corresponding one of constant mesh gear pairs for forward gears which rotates freely on a shaft is engaged by an axially displaceable sleeve of a synchronizer coupled to the shaft. In detail, the sleeve is axially moved into engagement with the gear wheel rotating freely on the shaft to fix the gear wheel to the shaft via the sleeve for rotation as a unit. For shifting to a reverse gear, an idler gear wheel is used. The idler gear wheel is axially moved into meshing engagement with both one gear wheel of a gear pair and the mating gear wheel of the gear pair to transmit a motion between the gear wheels of the gear pair.

The gearbox 3 is a so-called automated manual transmission (AMT). The gearbox 3 includes an actuator assembly 3C for shifting between gears and for selectively disengaging the clutch 31.

There is the differential 32 between the gearbox 3 and vehicle wheels 10. The drive axles 11 connect the vehicle wheels 10 to the differential 32.

The motor 4 is connected to the differential 32 via a speed reducer (not shown) such as a chain. In this example, the motor 4 features conversion of electrical energy to mechanical energy like an electric motor. The motor 4 features conversion of mechanical energy to electrical energy, too, like a generator.

A temperature sensor 41 is attached to the motor 4 to detect the temperature of the motor 4. The temperature sensor 41 is connected to the controller 8.

The controller 8 allows the inverter 5 to convert DC power supplied from the high-voltage battery 6 to three-phase AC power and to supply the three-phase AC power to the motor 4.

The controller 8 allows the inverter 5 to convert three-phase AC power generated by the motor 4 to DC power. This DC power is used to charge the high voltage battery 6, for example. The controller 8 detects the inverter voltage that is applied to the inverter 5 .

The high voltage battery 6 is, for example, a lithium ion storage battery, and it supplies power to the inverter 5 .

The high voltage battery 6 is provided with a battery sensor 6. A battery state sensor 61 detects charge/discharge current, voltage, and battery temperature of the high voltage battery 6. The battery state sensor 61 is connected to the controller 8. The controller 8 detects the amount of charge of the high-voltage battery 6 using the output of the battery state sensor 61.

The low voltage battery 7 is, for example, a lead battery, and it supplies electrical power to electric loads of the hybrid vehicle 1, such as the ISG 21 .

As described, the vehicle 1 takes the form of an electric hybrid vehicle with a parallel hybrid drivetrain that uses mechanical power from at least one of the engine 2, ISG 21, and motor 4 for driving the vehicle 1, so the vehicle moves with power that is dependent on at least one of the engine torque from the engine 2 and the motor torque from the ISG 21 or motor 4.

The controller 8 takes the form of a computer unit that includes a central processing unit (CPU), a RAM (Random Access Memory), a read only memory (ROM), a flash memory for storing backup data, input ports, and output ports.

The ROM of this computer unit stores programs for the computer unit to serve as the controller 8 in addition to various constants, various maps, and the like.

In other words, the CPU executes the programs stored in the ROM using the RAM as a work area, so these components of the computer unit serve as the controller 8.

Various sensors are connected to the input ports of the controller 8. The various sensors include, in addition to the before-mentioned temperature sensor 41 and the battery state sensor 61, a gear selector sensor 81, a gear shifting stroke sensor 82, a clutch stroke sensor 83, an engine speed sensor 84, and an input speed sensor 85.

The gear selector sensor 81 detects that one of positions which a driver selects via a gear selector (not shown), and provides a selector position indicative signal to the controller 8. The positions are a park "P" for parking, a reverse "R" for reverse, a neutral "N" for neutral, and a drive "D" for forward.

The gear shifting stroke sensor 82 detects a gear shifting stroke indicative of the progress of shifting between gears in the gearbox 3 and provides a gear shifting stroke indicative signal to the controller 8. In other words, the gear shifting stroke sensor 82 detects the position of that part which move during a gear shifting to a target gear. The controller 8 monitors the sensor signal from the gear shifting stroke sensor 82 to determine whether the gear shifting to the target gear is completed to achieve the full transmission between gear wheels of a pair for the target gear. A position in which the above-mentioned part is placed upon completion of the gear shifting to the target gear is determined using the results from an experiment or the like and set in advance. In addition, the controller 8 also stores other position at or around which the above-mentioned part is most likely to come into physical contact with the end face of at least one of the teeth of other gear wheel or a dog to induce a gear shifting block which hinders a smooth gear shifting.

The clutch stroke sensor 83 detects a clutch stroke (engaged or released condition) of the clutch 31 and provides a clutch stroke indicative signal to the controller 8. In other words, the clutch stroke sensor 83 detects the state of the clutch 31, i.e., the torque transmitting capacity of the clutch 31. In particular, the clutch stroke sensor 83 is arranged to detect the position of a clutch release member (not shown) that disengages the clutch 31 and interrupts the torque transmission. The position at which the clutch 31 is completely engaged and the position at which the clutch 31 starts to engage are determined using the results from an experiment or the like and set in advance.

The engine speed sensor 84 detects the rotational speed of the crankshaft 2A of the engine 2 as the engine speed, and provides a sensor signal indicative of the detected engine speed to the controller 8.

The input speed sensor 85 detects the rotational speed of the input shaft 3A of the gearbox 3 as the input speed, and provide a sensor signal indicative of the detected input speed to the controller 8. The input speed matches the engine speed while the clutch 31 is engaged.

On the other hand, various controlled objects, which include injectors (not shown) of the engine 2 in addition to the ISG 21, the actuator 3C of the gearbox 3, and the inverter 5 described above, are connected to the output ports of the controller 8.

In this example, the controller 8 calculates a driver torque request using a driver input, such as the degree of pressing the gas (accelerator) pedal or the like. based on the degree of opening of the accelerator. The controller 8 controls the engine 2, gearbox 3 , clutch 31, and motor 4 so that the driver torque request is applied to the vehicle wheels 10.

The controller 8 allows the electric hybrid vehicle 1 to switch between different modes. The different modes include but not limited to electric vehicle (EV) mode, hybrid electric vehicle (HEV) mode, and engine (EG) mode.

In EV mode, the clutch 31 is released to disconnect the engine 2, so a driver drives the vehicle with only the motor power from the motor 4. In HEV mode, the clutch 31 is engaged to connect the engine 2, so a driver drives the vehicle with the engine power from the engine 2 or a combination of the engine power from the engine 2 and the motor power from the motor 4. In EG mode, the clutch 31 is engaged, so a driver drives the vehicle 1 with only the engine power from the engine 2 .

The controller 8 controls a stop/start system for the engine 2 in the vehicle 1. The controller 8 auto stops the engine 2 following determination that predetermined automatic-stop conditions are met, and auto starts the engine 2 following determination that predetermined auto-start conditions are met.

In addition, the controller 8 controls the ISG 21, actuator 3C, and clutch 31.

As described before, the gearbox 3 includes gear pairs with parallel axes, so it might encounter so-called gear shifting block, i.e., an event that blocks engagement of gears of a pair for a new or target gear. In order to smooth out the interrupted progress of a gear shifting, a conventional approach is to temporarily engage the clutch 31 to connect the engine 2 for phase adjustment of the gears of the pair, but it is not applicable if a stop/start system stops the engine 2. If the engine 2 is stopped, the phase adjustment with the crankshaft 2A is impossible to perform.

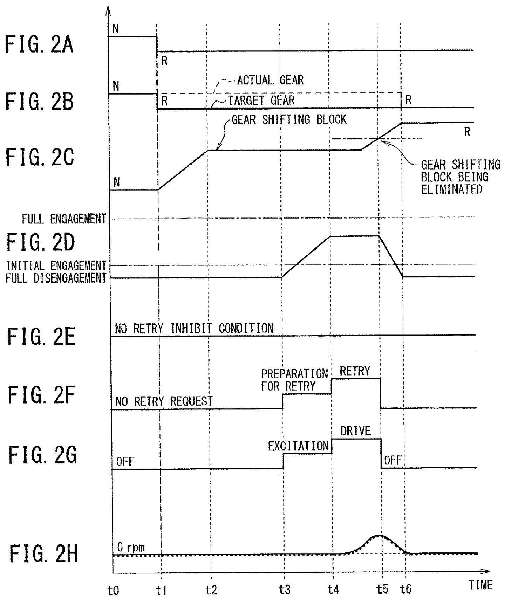

To smooth out the interrupted progress of a gear shifting to a target gear while the engine 2 is auto stopped by the stop/start system, the controller 8 controls the clutch 31 and the motor motion of the ISG 21 to drive the crankshaft 2A. The term "retry" is herein used to mean a series of operations to perform the phase adjustment of the gears of the pair. In the retry, the engagement of the clutch 31 means the process to control the degree of engagement of the clutch 31 so that the clutch stroke will take a position providing a predetermined and appropriate engagement (partially-engaged in this example) position or point between the biting point (labelled with "INITIAL ENGAGEMENT" in FIG. 2D) and the fully-engaged point (labelled with "FULL ENGAGEMENT" in FIG. 2D).

The controller 8 issues a retry request to begin the process to engage the clutch 31 and the process to prepare for the ISG 21 starting following determination that a gear shifting block occurs. In other words, concurrently with the beginning of the process to engage the clutch 31, the controller 8 issues a retry request to begin the process to prepare for the ISG 21 starting following determination that a gear shifting block occurs.

Monitoring the progress of engagement of the clutch 31C, the controller 8 issues a command to start the motor motion of the ISG 21 to drive (or spin) the crankshaft 2A upon or immediately after completion of the progress of the engagement of the clutch 31. In other words, the controller 8 issues a command to begin the process to start the motor motion of the ISG 21 to spin the crankshaft 2A immediately after completion of the progress of engagement of the clutch 31 to the predetermined engagement which provides a predetermined torque transmitting capacity.

The controller 8 issues a command to end the motor motion of the ISG 21 following determination that the gear shifting block is eliminated, and then issues a command to fully disengage the clutch 31 following determination that the motor motion of the ISG 21 ends.

With reference to FIG. 2A through FIG. 2H, the following is a description of changes in vehicle condition after the controller 8 issues a command to begin the retry process to eliminate a gear shifting block. FIG. 2A through FIG. 2H are plots of gear selector position, target/actual gear, gear shifting stroke, clutch stroke, availability of retry inhibit condition, retry request status, ISG control status, and input rotational speed, respectively.

In the description, the phrase a "target gear" is herein used to mean a speed or speed ratio targeted in the gearbox 3. The phrase an "actual gear" is herein used to mean an actual speed or speed ratio in the gearbox 3. The phrase "gear shifting stroke" is herein used to mean the progress of a gear shifting to a target gear. To determine the progress of a gear shifting to a target gear, the controller 8 uses, as a gear shifting stroke, the position of a part that moves from beginning to end of the gear shifting. One example of the part that moves over the entirety of a gear shifting is a reverse idler gear wheel that moves to a dive-type reverse gear. Availability of retry inhibit condition is indicated by a signal indicative of availability of retry inhibit condition. In this example, this signal is indicative of availability of retry inhibit condition which inhibits the retry using the ISG 21. This signal results from processing information from other controller(s), such as information that now is not the right time to begin the process to retry, judging from conditions of the vehicle 1. Retry request status is a signal indicative of a request issued by the controller 8 to the ISG 21. ISG control status is the internal control status of the ISG 21.

In the example, the controller 8 is configured to perform the overall control of the vehicle 1, so the controller 8 follows the internal protocol to update a retry request and the availability of retry inhibit condition with each other. In the event that the overall control is divided and an engine control module (ECM), which controls the engine 2, and a transmission (gearbox) control module (TCM), which controls the gearbox 3, cooperate with each other to take over the overall control of the vehicle 1, the ECM sends an availability of retry inhibit condition to the TCM, and the TCM requests a retry to the ECM.

With reference to FIG. 2A through FIG. 2H, the following is a description about a method to control a drivetrain such that the drivetrain will automatically eliminate a gear shifting block. FIG. 2A through FIG. 2H illustrate a gear shifting sequence to a reverse gear while the vehicle 1 is at a complete stop. At time t0, the engine 2 is stopped by the stop/start system; the gear selector is placed in NEUTRAL (labelled with "N" in FIG. 2A); the clutch 31 is fully disengaged (labelled with "FULL DISENGAGEMENT" in FIG. 2D); no retry inhibit condition exists (labelled with "NO RETRY INHIBIT CONDITION" in FIG. 2E); no retry request is issued (labelled with "NO RETRY REQUEST" in FIG. 2F); the ISG 21 control status is OFF mode (labelled with "OFF" in FIG. 2G), and the input rotational speed is zero (labelled with "0 rpm" in FIG. 2H).

Subsequently, at time t1, the gear selector is placed to reverse position (labelled with "R" in FIG. 2A) by a driver of the vehicle 1; a target gear is changed to a reverse gear (labelled "R" in FIG. 2B), and the controller 8 issues a command to begin the process to start the motion of the actuator 3C to move the part to achieve the target gear (reverse gear), so the gear shifting stroke, which is indicated by the sensor signal of the gear shifting stroke sensor 81 that is arranged to detect the motion of the actuator 3C or the movement of the part, begins to leave neutral position (labelled with "N" in FIG. 2C) toward the reverse position (labelled with "R" in FIG. 2C).

Subsequently, at time t2, the progress of the gear shifting toward the reverse gear (labelled with "GEAR SHIFTING BLOCK" in FIG. 2C), but the controller 8 does not determine that a gear shifting block occurs. In fact, the controller 8 determines that a gear shifting occurs following determination that the stopped progress continued for a certain period. While the progress of the gear shifting is being stopped, the actuator 3C keeps on urging the part toward the completion of a gear shifting with an unaltered force. The magnitude of such unaltered force may be temporarily reduced.

Subsequently, at time t3 upon elapse of a predetermined period or time (this predetermined period is experimentally determined and includes the certain period mentioned above) since time t1, at which the target gear was changed to the reverse gear, the controller 8 determines whether the progress of the gear shifting is being stopped, without interruption, since time t2 (when the progress was stopped) and determines that a gear shifting block occurs if this is the case, and the controller 8 issues a command to begin the process to start engaging the clutch 31 toward the full engagement point (labelled with "FULL ENGAGEMENT" in FIG. 2D).

Moreover, at time t3, the controller 8 issues a command (a request for preparation for retry) to begin the process to prepare for retry, so the retry request status shifts to preparation for retry mode (labelled with "PREPARATION FOR RETRY" in FIG. 2F). In detail, the ISG status shifts to excitation mode (labelled with "EXCITATION" in FIG. 2G), so the ISG 21 is excited. That is, at time t3, the ISG 21 is excited in preparation for imminent motion of the ISG 21 in drive mode. In this way, the ISG 21 is excited in preparation for imminent motion of the ISC 21 to drive or provide a motor motion to the crankshaft 2A, so the ISG 21 will begin to rotate the crankshaft 2A when needed (at time t4) without any delay. As described before, the controller 8 does not determine whether a gear shifting block occurs until elapse of the predetermined period since time t1, but it determines whether or not a gear shifting block occurs upon elapse of the predetermined period rather than at time t2 when the progress of the gear shifting was stopped. This logic prevents the controller 8 from erroneously determining that a gear shifting occurs when the progress of a gear shifting is stopped in a moment during the mutual contact of gear wheels, so it reduces the occurrence of unnecessary retry.

Subsequently, the clutch stroke exceeds the initial engagement point (labelled with "INITIAL ENGAGEMENT" in FIG. 2D) and reaches a predetermined partial engagement at time t4 (see FIG. 2D). After time t4, the clutch 31 is maintained at the predetermined (partial) engagement point, so is the case with the clutch stroke. At time t4, the retry request status shifts to retry mode (labelled with "RETRY" in FIG. 2F); the ISG status shifts to drive mode (labelled with "DRIVE" in FIG. 2G), and the ISG 21 drives (or spins) the crankshaft 2A. At time t4, the ISG 21 begins to spin the crankshaft 2A, the rotational speed of crankshaft 2A begins to rise, so the angular displacement of the input shaft 3A of the gearbox 3 begins to change because the clutch 31 is maintained at the predetermined (partial) engagement point.

As the input shaft 3A turns, the phase of one of the gear wheels of a pair for a reverse gear changes, so the gear wheels mesh, eliminating a gear shifting block (labelled with "GEAR SHIFTING BLOCK BEING ELIMINATED" in FIG. 2C), starting the progress of the gear shifting to achieve the reverse gear. Thus, the gear shifting stroke begins to change again toward the reverse position (labelled with "R" in FIG. 2C). In other words, a reverse gear wheel is turned by the input shaft 3A to change the phase of the one gear wheel of the pair, so getting a reverse idler gear wheel out of that contact with the end of the reverse gear wheel which blocks the movement of the reverse idler gear wheel. This allows the reverse idler gear wheel to move again in a direction to achieve the reverse gear because it is urged by the actuator 3C in such direction.

With reference to FIG. 2D, the predetermined position to which the clutch stroke reaches at time t4 corresponds to a predetermined and appropriate engagement (partially-engaged in this example) position or point between the biting point (labelled with "INITIAL ENGAGEMENT" in FIG. 2D) and the fully-engaged point (labelled with "FULL ENGAGEMENT" in FIG. 2D). More specifically, the above-mentioned predetermined position of the clutch stroke corresponds to such a degree of engagement of the clutch 31 as to convert the rotation of the crankshaft 2A to that angular displacement of the input shaft 3A of the gearbox 3 which beings about such a change in phase of one of the gear wheels of a pair for a target gear as to cause the gear wheels of the pair to mesh, but which does not bring about any substantial angular displacement of the vehicle wheels 10. In other words, the predetermined position of the clutch stroke corresponds to a partial engagement, which provide a slip, whereby the angular displacement of the input shaft 3A, into which the rotation of the crankshaft 2A is translated, does not create a driving force that causes the vehicle 1 to move from a complete stop.

Similarly, the angular displacement and torque of the motor motion of the ISG 21 for retry mode that begins at time t4 are determined so that a slight angular displacement of the input shaft 3A of the gearbox 3 will bring about such a change in phase of one of the gear wheels of a pair for a target gear as to cause the gear wheels of the pair to mesh, but it will not bring about any substantial angular displacement of the vehicle wheels 10. Moreover, the values of the determined angular displacement and torque are set to the ISG 21 as the default in retry mode as being kept separate from values for other operations, so they may be selectively adjusted to modify settings. If the ISG 21 has a rotation control that allows a minute rotation, the occurrence of a shock to the hybrid vehicle 1 is mitigated with the clutch 31 being fully engaged.

The gear shifting stroke begins to change again toward the reverse position (labelled with "R" in FIG. 2C). At time t5, the gear shifting stroke leaves a so-called "gear shifting block range" that highlights gear shifting stroke positions at which gear shifting blocks tend to occur, so the controller 8 determines that the gear shifting block is eliminated (see FIG. 2C). The progress of gear shifting subsequently continues. At time t5, the controller 8 determines that the gear shifting block is eliminated (see FIG. 2C); the retry action ends (see FIG. 2G); the retry request status changes to no request (see FIG. 2F); the ISG control status changes to off (see FIG. 2F) to end the motor motion of the ISG 21, and the controller 8 issues a command to begin the process to disengage the clutch 31, so the clutch stroke changes in a direction toward the fully disengagement position (see FIG. 2D). In this example, the controller 8 determines that a gear shifting block is eliminated following determination that the gear shifting stroke has left the gear shifting block range. Alternatively, the controller 8 may determine that a gear shifting block is eliminated following determination that the input rotation speed (or angular displacement) of the input shaft 3A reaches a predetermined rotation speed (or predetermined angular displacement) to confirm a change in phase of one of gear wheels of a pair for a target gear.

Subsequently, at time t6, the gear shifting stroke reaches the reverse position (see FIG. 2C), so the actual gear achieves the reverse gear (see FIG. 2B), the input rotational speed become 0 rpm (see FIG. 2H).

In addition, the controller 8 issues a command to begin the process to disengage the clutch 31 (see time t5 in FIG. 2D) following determination that a gear shifting block is eliminated (see time t5 in FIG. 2C), so the clutch stroke subsequently reaches the full disengagement position (labelled with "FULL DISENGAGEMENT" in FIG. 2D) at time t6 and the clutch 31 is fully disengaged.

FIG. 2A through FIG. 2H illustrate the process to automatically eliminate a gear shifting block that may occur during a gear shifting beginning with the driver's operation to move the selector from NEUTRAL (labelled with N in FIG. 2A) to REVERSE (labelled with R in FIG. 2A). A gear shifting block may occur depending on the condition of a synchronization mechanism during a gear shifting beginning with the driver's operation to move the selector from NEUTRAL to the forward first gear. In this case, the gear shifting block will be eliminated using the above-mentioned process.

As described, the controller 8 issues a command to begin the process to engage the clutch 31 and a command to begin the process to control the motor motion of the ISG 21 to spin the crankshaft 2A following determination that a gear shifting block occurs while the engine 2 is being stopped.

Because of the controlled motor motion of the ISG 21, even though a gear shifting block occurs while the engine 2 is being stopped, the gear shifting block is automatically eliminated through the process to change the phase of one of gear wheels of a pair for the target gear with the input shaft 3A powered by the ISG 21. As the gear shifting block has been eliminated, the gear wheels of the pair mesh completely to provide the target gear.

In addition, a gear shifting block is eliminated in a brief time because temporarily switching to other gear is no longer needed.

As a result, even though the engine is being stopped, a gear shifting is completed in a brief time because a gear shifting block is eliminated in a brief time.

As described, in the example, the controller 8 issues a command to begin the process to engage the clutch 31 and at the same time issues a command to begin the process to prepare for the ISG 21 starting following determination that a gear shifting occurs.

Because of beginning the process to engage the clutch 31 and the process to start excitation in preparation for the ISG 21 starting following determination that a gear shifting occurs, the excitation of the ISG 21 is completed well before starting the motor motion of the ISG 21. For this reason, even though the engine is being stopped, the gear shifting block is eliminated in a brief time, and the gear shifting is completed in a brief time.

Moreover, in the example, the controller 8 issues a command to begin the process to start the motor motion of the ISG 21 following determination that the clutch 31 achieves a predetermined engagement.

This prevents the motor motion of the ISG 21 from being started before achieves the predetermined engagement, mitigating a shock acting on the input shaft 3A of the gearbox 3 from the clutch 31.

In addition, in the example, the controller 8 issues a command to begin the process to stop the motor motion of the ISG 21 and at the same time issues a command to begin the process to disengage the clutch 31.

Because of this, the motor motion of the ISG 21 is immediately stopped after elimination of the gear sifting block, mitigating the shock inside the gearbox 3.

Although, the foregoing description contains embodiment(s) according to the present invention, it will be apparent to a person skilled in the art that modifications may be made without departing from the scope of the invention, which is defined by the following claims.

All such modifications and equivalents are intended to be included in the following claims.

### [List of Reference Numerals]

- 1: Vehicle
- 2: Engine
- 2A: Crankshaft
- 3: Gearbox
- 3C: Actuator
- 8: Controller
- 21: Electric Machine in the form of Integrated Starter Generator (ISG)
- 31: Clutch

## Claims

1. A system for shifting between gears in a gearbox of a drivetrain in a vehicle, comprising:
an engine (2) having a crankshaft (2A);
an electric machine (21) configured to provide a motor motion to the crankshaft (2A);
a gearbox (3) having an input shaft (3A);
a clutch (31) between the crankshaft (2A) and the input shaft (3A),
**characterized by**:
a controller (8) configured to engage the clutch (31) and start the electric machine (21) to provide a motor motion to the crankshaft (2A) following determination that a gear shifting block occurs during shifting between gears in the gearbox (3) while the engine (2) is being stopped.

2. The system as claimed in claim 1, wherein the controller (8) issues a command to begin the process to engage the clutch (31) and the process to prepare for starting the electric machine (21) upon determination that a gear shifting block occurs during shifting between gears in the gearbox (3) while the engine (2) is being auto stopped.

3. The system as claimed in claim 1 or 2, wherein the controller (8) starts the electric machine (21) to enable the electric machine (21) to provide a motor motion to the crankshaft (2A) following determination that the clutch (31) is engaged to provide a torque transfer path from the crankshaft (2A) to the input shaft (3A) of the gearbox (3).

4. The system as claimed in any one of claims 1 to 3, wherein the controller (8) stops the motor motion of the electric machine (21) and disengages the clutch (31) following determination that the gear shifting block is eliminated.

5. The system as claimed in claim 1, wherein the electric machine (21) is an integrated starter generator (ISG).

6. A method for shifting between gears in a gearbox of a drivetrain in a vehicle,
and for a system comprising:
an engine (2) having a crankshaft (2A);
an integrated starter generator (ISG) configured to provide motor motion to the crankshaft (2A);
a gearbox (3) having an input shaft (3A);
a clutch (31) between the crankshaft (2A) and the input shaft (3A),
**characterized by**:
auto engaging the clutch (31) to provide a torque transfer path from the crankshaft (2A) of the engine (2) to the input shaft (3A) of the gearbox (3) and auto starting the integrated starter generator (ISG) to provide a motor motion to the crankshaft (2A) following determination that a gear shifting block occurs during shifting between gears in the gearbox (3) while the engine (2) is being auto stopped.

7. The method as claimed in claim 6, wherein the shifting between gears in the gearbox (3) is started in response to a gear selector for the gearbox (3) being moved from NEUTRAL to REVERSE.

8. The method as claimed in claim 6, wherein the shifting between gears in the gearbox (3) is started in response to a gear selector for the gearbox (3) being moved to a forward first gear from NEUTRAL.

9. The method as claimed in claim 7, wherein the determination that a gear shifting block occurs during shifting between gears in the gearbox (3) is made upon elapse of a predetermined period (at time t3 in FIG. 2C) since the shifting between gears in the gearbox (3) being started (at time t1 in FIG. 2B) if the progress of the shifting between gears in the gearbox (3) is being stopped, without interruption, since the progress of the shifting between gears in the gearbox (3) being stopped (at time t2 in FIG. 2C).

10. The method as claimed in claim 9, wherein the progress of the shifting between gears in the gearbox (3) is detected with a gear shifting stroke sensor (82) that provides a gear shifting stroke indicative signal indicative of the progress of shifting between gears in the gearbox (3).

11. The method as claimed in claim 10, wherein
the auto engaging the clutch (31) and auto starting the integrated starter generator (ISG) include:
beginning the process to start auto engagement of the clutch (31) and beginning the process to prepare for the ISG starting (at time t3 in FIG. 2D, FIG. 2F, and FIG. 2G) upon the determination (at time t3) that the gear shifting block occurs during shifting between gears in the gearbox (3) while the engine (2) is being auto stopped.

12. The method as claimed in claim 11, wherein the degree of engagement of the clutch (31) is detected with a clutch stroke sensor (83) that provides a clutch stroke indicative signal indicative of the degree of engagement of the clutch (31).

13. The method as claimed in claim 11, wherein the clutch (31) is kept at a predetermined engagement point to provide a predetermined torque transmitting capacity after reaching the predetermined engagement point (at time t4 in FIG. 2D).

14. The method as claimed in claim 13, wherein
the auto starting the integrated starter generator (ISG) includes:
ending the process to prepare for the ISG starting and beginning the process to start the motor motion of the ISG following determination that the clutch (31) reaches the predetermined engagement point that provides the predetermined torque transmitting capacity (at time t4 in FIG. 2D, FIG. 2F, and FIG. 2G).

15. The method as claimed in claim 14, wherein
the determination that the gear shifting block is eliminated is made (at time t5 in FIG. 2C) following determination that the gear shifting stroke provided by the gear shifting stroke sensor (82) has left a predetermined gear shifting block range.

16. The method as claimed in claim 15, wherein
the auto engaging the clutch (31) and auto starting the integrated starter generator (ISG) include:
disengaging the clutch (31) from the predetermined engagement point and ending the motor motion of the ISG (21) following determination that the gear shifting block is eliminated (at time t5 in FIG. 2D, FIG. 2F, and FIG. 2G).

## Patentansprüche

1. System zum Schalten zwischen Gängen in einem Getriebe eines Antriebsstrangs in einem Fahrzeug, umfassend:
einen Motor (2), welcher eine Kurbelwelle (2A) aufweist;
eine elektrische Maschine (21), welche dazu eingerichtet ist, der Kurbelwelle (2A) eine Motorbewegung bereitzustellen;
ein Getriebe (3), welches eine Eingangswelle (3A) aufweist;
eine Kupplung (31) zwischen der Kurbelwelle (2A) und der Eingangswelle (3A),
**gekennzeichnet durch**:
eine Steuereinrichtung (8), welche dazu eingerichtet ist, die Kupplung (31) in Eingriff zu bringen und die elektrische Maschine (21) zu starten, um der Kurbelwelle (2A) eine Motorbewegung bereitzustellen, folgend auf eine Bestimmung, dass eine Gangschaltblockade während eines Schaltens zwischen Gängen in dem Getriebe (3) auftritt, während der Motor (2) selbsttätig gestoppt wird.

2. System nach Anspruch 1, wobei die Steuereinrichtung (8) einen Befehl ausgibt, den Prozess zum in Eingriff bringen der Kupplung (31) und den Prozess zum Vorbereiten eines Starten der elektrischen Maschine (21) zu beginnen, auf eine Bestimmung hin, dass eine Gangschaltblockade während eines Schaltens zwischen Gängen in dem Getriebe (3) auftritt, während der Motor (2) selbsttätig gestoppt wird.

3. System nach Anspruch 1 oder 2, wobei die Steuereinrichtung (8) die elektrische Maschine (21) startet, um zu ermöglichen, dass die elektrische Maschine (21) der Kurbelwelle (2A) eine Motorbewegung bereitstellt, folgend auf eine Bestimmung, dass die Kupplung (31) in Eingriff gebracht ist, um einen Drehmomentübertragungspfad von der Kurbelwelle (2A) zu der Eingangswelle (3A) des Getriebes (3) bereitzustellen.

4. System nach einem der Ansprüche 1 bis 3, wobei die Steuereinrichtung (8) die Motorbewegung der elektrischen Maschine (21) stoppt und die Kupplung (21) löst, folgend auf eine Bestimmung, dass die Gangschaltblockade eliminiert ist.

5. System nach Anspruch 1, wobei die elektrische Maschine (21) ein integrierter Starter-Generator (ISG) ist.

6. Verfahren zum Schalten zwischen Gängen in einem Getriebe eines Antriebsstrangs in einem Fahrzeug und für ein System, umfassend:
einen Motor (2), welcher eine Kurbelwelle (2A) aufweist;
einen integrierten Starter-Generator (ISG), welcher dazu eingerichtet ist, der Kurbelwelle (2A) eine Motorbewegung bereitzustellen;
ein Getriebe (3), welches eine Eingangswelle (3A) aufweist;
eine Kupplung (31) zwischen der Kurbelwelle (2A) und der Eingangswelle (3A),
**gekennzeichnet durch**:
selbsttätig in Eingriff bringen der Kupplung (31), um einen Drehmomentübertragungspfad von der Kurbelwelle (2A) des Motors (2) zu der Eingangswelle (3A) des Getriebes (3) bereitzustellen, und selbsttätig Starten des integrierten Starter-Generators (ISG), um der Kurbelwelle (2A) eine Motorbewegung bereitzustellen, folgend auf eine Bestimmung, dass eine Gangschaltblockade während eines Schaltens zwischen Gängen in dem Getriebe (3) auftritt, während der Motor (2) selbsttätig gestoppt wird.

7. Verfahren nach Anspruch 6, wobei das Schalten zwischen Gängen in dem Getriebe (3) in Reaktion darauf gestartet wird, dass eine Gangauswahleinrichtung für das Getriebe (3) von NEUTRAL zu REVERSE bewegt wird.

8. Verfahren nach Anspruch 6, wobei das Schalten zwischen Gängen in dem Getriebe (3) in Reaktion darauf gestartet wird, dass eine Gangauswahleinrichtung für das Getriebe (3) von NEUTRAL zu einem ersten Vorwärtsgang bewegt wird.

9. Verfahren nach Anspruch 7, wobei die Bestimmung, dass eine Gangschaltblockade während eines Schaltens zwischen Gängen in dem Getriebe (3) auftritt, auf ein Verstreichen eines vorbestimmten Zeitraums (zu der Zeit t3 in Fig. 2C) hin vorgenommen wird, seit das Schalten zwischen Gängen in dem Getriebe (3) gestartet worden ist (zu der Zeit t1 in Fig. 2B), wenn der Fortschritt des Schaltens zwischen Gängen in dem Getriebe (3) gestoppt wird, ohne Unterbrechung, seit der Fortschritt des Schaltens zwischen Gängen in dem Getriebe (3) gestoppt worden ist (zu der Zeit t2 in Fig. 2C).

10. Verfahren nach Anspruch 9, wobei der Fortschritt des Schaltens zwischen Gängen in dem Getriebe (3) mit einem Gangschaltwegsensor (82) detektiert wird, welcher ein für einen Gangschaltweg indikatives Signal bereitstellt, welches für den Fortschritt eines Schaltens zwischen Gängen in dem Getriebe (3) indikativ ist.

11. Verfahren nach Anspruch 10, wobei das selbsttätige in Eingriff bringen der Kupplung (31) und das selbsttätige Starten des integrierten Starter-Generators (ISG) umfassen:
Beginnen des Prozesses zum selbsttätigen in Eingriff bringen der Kupplung (31) und Beginnen des Prozesses zum Vorbereiten des Startens des ISG (zu der Zeit t3 in Fig. 2D, Fig. 2F und Fig. 2G), auf das Bestimmen (zu der Zeit t3) hin, dass die Gangschaltblockade während eines Schaltens zwischen Gängen in dem Getriebe (3) auftritt, während der Motor (2) selbsttätig gestoppt wird.

12. Verfahren nach Anspruch 11, wobei der Eingriffsgrad der Kupplung (31) mit einem Kupplungswegsensor (83) detektiert wird, welcher ein für einen Kupplungsweg indikatives Signal bereitstellt, welches für den Eingriffsgrad der Kupplung (31) indikativ ist.

13. Verfahren nach Anspruch 11, wobei die Kupplung (31) an einem vorbestimmten Eingriffspunkt gehalten wird, um eine vorbestimmte drehmomentübertragende Kapazität bereitzustellen, nachdem der vorbestimmte Eingriffspunkt erreicht worden ist (zu der Zeit t4 in Fig. 2D).

14. Verfahren nach Anspruch 13, wobei das selbsttätige Starten des integrierten Starter-Generators (ISG) umfasst:
Beenden des Prozesses zum Vorbereiten des Startens des ISG und Beginnen des Prozesses zum Starten der Motorbewegung des ISG, folgend auf die Bestimmung, dass die Kupplung (31) den vorbestimmten Eingriffspunkt erreicht hat, welcher die vorbestimmte drehmomentübertragende Kapazität bereitstellt (zu der Zeit t4 in Fig. 2D, Fig. 2F und Fig. 2G).

15. Verfahren nach Anspruch 14, wobei die Bestimmung, dass die Gangschaltblockade eliminiert ist, vorgenommen wird (zu der Zeit t5 in Fig. 2C), folgend auf die Bestimmung, dass der durch den Gangschaltwegsensor (82) bereitgestellte Gangschaltweg einen vorbestimmten Gangschaltblockadebereich verlassen hat.

16. Verfahren nach Anspruch 15, wobei das selbsttätige in Eingriff bringen der Kupplung (31) und das selbsttätige Starten des integrierten Starter-Generators (ISG) umfassen:
Lösen der Kupplung (31) von dem vorbestimmten Eingriffspunkt und Beenden der Motorbewegung des ISG (21), folgend auf das Bestimmen, dass die Gangschaltblockade eliminiert worden ist (zu der Zeit t5 in Fig. 2D, Fig. 2F und Fig. 2G).

## Revendications

1. Système pour un changement entre les vitesses dans une boite de vitesses d'une chaîne cinématique dans un véhicule, comprenant :
un moteur (2) présentant un vilebrequin (2A) ;
une machine électrique (21) configurée pour fournir un mouvement motorisé au vilebrequin (2A) ;
une boite de vitesses (3) présentant un arbre d'entrée (3A) ;
un embrayage (31) entre le vilebrequin (2A) et l'arbre d'entrée (3A),
**caractérisé par** :
un dispositif de commande (8) configuré pour être en prise avec l'embrayage (31) et démarrer la machine électrique (21) pour fournir un mouvement motorisé au vilebrequin (2A) à la suite de la détermination qu'un blocage de changement de vitesse se produit pendant le changement entre les vitesses dans la boite de vitesses (3) pendant que le moteur (2) est en train d'être arrêté.

2. Système selon la revendication 1, dans lequel le dispositif de commande (8) émet une instruction de commencer le processus pour mettre en prise l'embrayage (31) et le processus pour préparer le démarrage de la machine électrique (21) lors de la détermination qu'un blocage de changement de vitesse se produit pendant le changement entre les vitesses dans la boite de vitesses (3) pendant que le moteur (2) est en train d'être arrêté automatiquement.

3. Système selon la revendication 1 ou 2, dans lequel le dispositif de commande (8) démarre la machine électrique (21) pour permettre à la machine électrique (21) de fournir un mouvement motorisé au vilebrequin (2A) à la suite de la détermination que l'embrayage (31) est mis en prise pour fournir un trajet de transfert de couple à partir du vilebrequin (2A) vers l'arbre d'entrée (3A) de la boite de vitesses (3).

4. Système selon l'une quelconque des revendications 1 à 3, dans lequel le dispositif de commande (8) arrête le mouvement motorisé de la machine électrique (21) et dégage l'embrayage (31) à la suite de la détermination que le blocage de changement de vitesse est éliminé.

5. Système selon la revendication 1, dans lequel la machine électrique (21) est un alterno-démarreur intégré (ISG).

6. Procédé pour un changement entre les vitesses dans une boite de vitesses d'une chaîne cinématique dans un véhicule, et pour un système comprenant :
un moteur (2) présentant un vilebrequin (2A) ;
un alterno-démarreur intégré (ISG) configuré pour fournir un mouvement motorisé au vilebrequin (2A) ;
une boite de vitesses (3) présentant un arbre d'entrée (3A) ;
un embrayage (31) entre le vilebrequin (2A) et l'arbre d'entrée (3A),
**caractérisé par** :
la mise en prise automatique de l'embrayage (31) pour fournir un trajet de transfert de couple partant du vilebrequin (2A) du moteur (2) à l'arbre d'entrée (3A) de la boite de vitesses (3) et le démarrage automatique de l'alterno-démarreur intégré (ISG) pour fournir un mouvement motorisé au vilebrequin (2A) à la suite de la détermination qu'un blocage de changement de vitesse se produit pendant un changement entre les vitesses dans la boite de vitesses (3) pendant que le moteur (2) est en train d'être arrêté automatiquement.

7. Procédé selon la revendication 6, dans lequel le changement entre les vitesses dans la boite de vitesses (3) est démarré en réponse à un sélecteur de vitesse pour la boîte de vitesses (3) en train d'être déplacé à partir du point mort vers la marche arrière.

8. Procédé selon la revendication 6, dans lequel le changement entre les vitesses dans la boite de vitesses (3) est démarré en réponse à un sélecteur de vitesse pour la boîte de vitesses (3) en train d'être déplacé vers une première vitesse de marche avant à partir du point mort.

9. Procédé selon la revendication 7, dans lequel la détermination qu'un blocage de changement de vitesse se produit pendant un changement entre les vitesses dans la boite de vitesses (3) est réalisée suite à l'écoulement d'une période prédéterminée (au temps t3 sur la figure 2C) depuis le changement entre les vitesses dans la boite de vitesses (3) en train d'être démarré (au temps t1 sur la figure 2B) si le déroulement du changement entre les vitesses dans la boite de vitesses (3) est en train d'être arrêté, sans interruption, depuis que le déroulement du changement entre les vitesses dans la boite de vitesses (3) est en train d'être arrêté (au temps t2 sur la figure 2C).

10. Procédé selon la revendication 9, dans lequel le déroulement du changement entre les vitesses dans la boite de vitesses (3) est détecté avec un capteur de course de changement de vitesse (82) qui fournit un signal indicateur d'une course de changement de vitesse indiquant le déroulement de changement entre les vitesses dans la boite de vitesses (3).

11. Procédé selon la revendication 10, dans lequel la mise en prise automatique de l'embrayage (31) et le démarrage automatique de l'alterno-démarreur intégré (ISG) comportent :
le commencement du processus pour démarrer la mise en prise automatique de l'embrayage (31) et le commencement du processus pour préparer le démarrage de l'ISG (au temps t3 sur les figures 2D, figure 2F, et figure 2G) lors de la détermination (au temps t3) que le blocage de changement de vitesse se produit pendant le changement entre les vitesses dans la boite de vitesses (3) pendant que le moteur (2) est en train d'être arrêté automatiquement.

12. Procédé selon la revendication 11, dans lequel le degré de mise en prise de l'embrayage (31) est détecté avec un capteur de course d'embrayage (83) qui fournit un signal indicateur d'une course d'embrayage indiquant le degré de mise en prise de l'embrayage (31).

13. Procédé selon la revendication 11, dans lequel l'embrayage (31) est maintenu au niveau d'un point de mise en prise prédéterminé pour fournir une capacité de transmission de couple prédéterminée après l'atteinte du point de mise en prise prédéterminé (au temps t4 sur la figure 2D).

14. Procédé selon la revendication 13, dans lequel le démarrage automatique de l'alterno-démarreur intégré (ISG) comporte :
l'achèvement du processus pour préparer le démarrage de l'ISG et le commencement du processus pour démarrer le mouvement motorisé de l'ISG à la suite de la détermination que l'embrayage (31) a atteint le point de mise en prise prédéterminé qui fournit la capacité de transmission de couple prédéterminée (au temps t4 sur les figure 2D, figure 2F, et figure 2G).

15. Procédé selon la revendication 14, dans lequel la détermination que le blocage de changement de vitesse est éliminé est réalisé (au temps t5 sur la figure 2C) à la suite de la détermination que la course de changement de vitesse fournie par le capteur de course de changement de vitesse (82) a quitté une plage de blocage de changement de vitesse prédéterminée.

16. Procédé selon la revendication 15, dans lequel la mise en prise automatique de l'embrayage (31) et le démarrage automatique de l'alterno-démarreur intégré (ISG) comportent :
le dégagement de l'embrayage (31) du point de mise en prise prédéterminé et l'achèvement du mouvement motorisé de l'ISG (21) à la suite de la détermination que le blocage de changement de vitesse est éliminé (au temps t5 sur les figure 2D, figure 2F, et figure 2G).
